# EUROPEAN PATENT SPECIFICATION

(11) **EP 1 528 157 B1**
(45) Date of publication and mention of the grant of the patent: **09.08.2006**
(21) Application number: 04014978.3
(22) Date of filing: 25.06.2004
(51) Int. Cl.: E01F 15/04, F16B 13/14, F16B 5/02

(54) **Tie-rod device for anchoring road and superhighway barriers**
Stangenvorrichtung für die Verankerung von Strassen- und Autobahnbarrieren
Dispositif de barre pour l'ancrage des barrières de chaussée et d'autoroute

(30) Priority: 23.10.2003 IT MI20032081
(43) Date of publication of application: 04.05.2005
(73) Proprietor: Bulfer S.p.A., 24046 Osio Sotto, Bergamo (IT)
(72) Inventor: Serafini, Silvano, 24046 Osio Sotto (Bergamo) (IT)
(74) Representative: Cicogna, Franco

(56) References cited:
- AU-A- 7 833 475
- DE-U- 20 012 142
- US-A- 4 531 861
- US-A- 5 584 626

## Description

### BACKGROUND OF THE INVENTION

The present invention relates to a tie-rod device which has been specifically designed for anchoring road and superhighway barriers.

As is known, urban and extra-urban roads are conventionally protected, at least at the most dangerous regions thereof, by metal or concrete protecting barriers.

The metal barriers are anchored to the ground by anchoring bolts or poles as disclosed in DE 200 12 142 U, which are engaged in specifically formed recesses at the base of the barrier and being fixed to the ground by a lot of different fixing means and methods.

However, the above mentioned anchoring is very complex because of the nature of the road surface and other factors and, in general, it is very difficult to provide a safe and strong anchoring adapted to resist against high power impacts.

US 4 531 861 discloses an anchoring rod having threaded portions with different pitches and reverse directions, which is adhesively secured to a concrete base.

### SUMMARY OF THE INVENTION

Accordingly, the aim of the present invention is to provide such a tie-rod device which has been specifically designed for anchoring road and superhighway barriers, which is very flexible in operation.

Within the scope of the above mentioned aim, a main object of the present invention is to provide such a tie-rod device for anchoring road and superhighway barriers which allows to remove from the barrier, in a comparatively short time, possibly damaged elements of the barrier or guard-rail and of said tie-rod device itself, thereby allowing the damaged elements to be quickly and easily replaced.

Another object of the present invention is to provide such a tie-rod device which can be simply and quickly assembled and disassembled.

According to one aspect of the present invention, the above mentioned aim and objects, as well as yet other objects, which will become more apparent hereinafter, are achieved by a tie-rod device according to claim 1.

Further advantageous embodiments of the tie-rod device according to the invention being defined in the dependent claims.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative example, in the accompanying drawings, where:

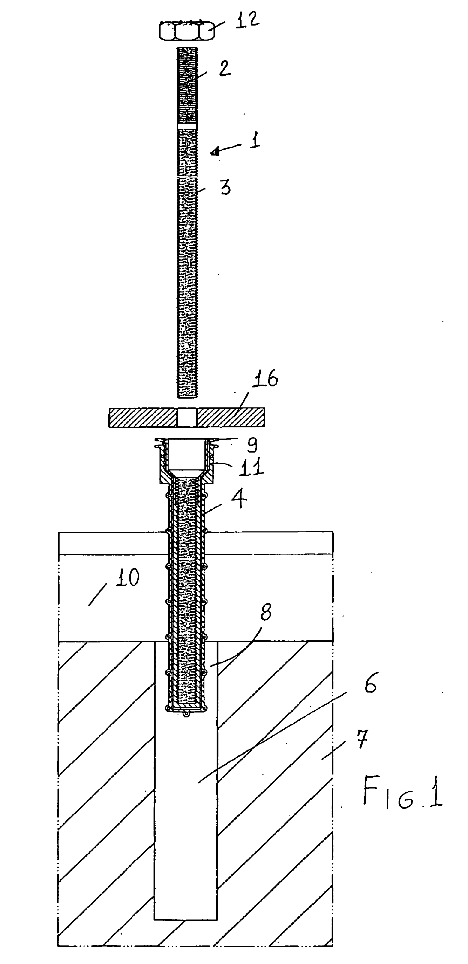

Figure 1 is a side cross-sectioned view of a roadbed in which a hole is formed for housing a plastic material outer shell and in the body of which is engaged the metal tie-rod device according to the present invention, which comprises a bearing flat washer and a nut;

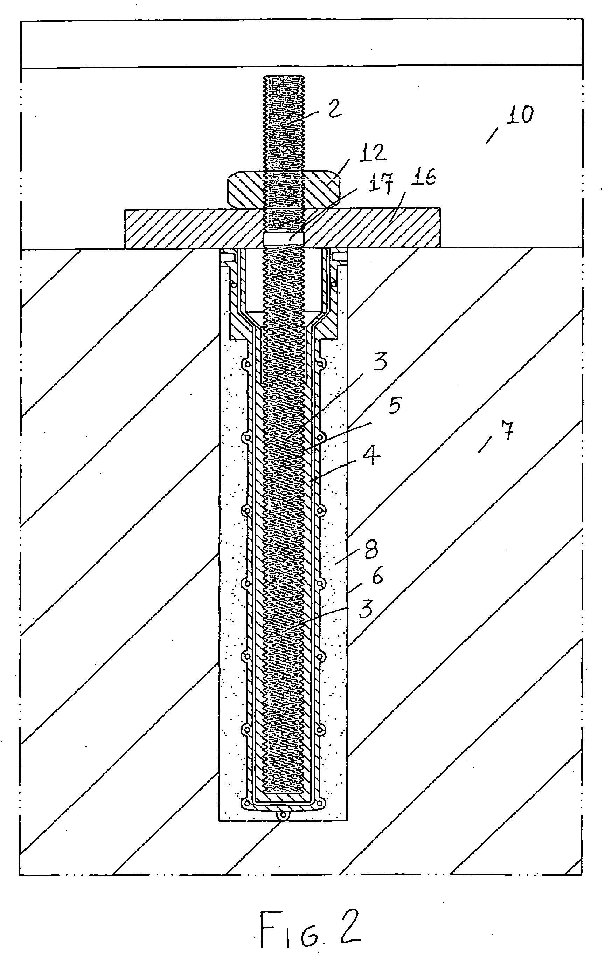

Figure 2 is a further side cross-sectional view of the anchoring tie-rod device according to the present invention, after the application thereof to a roadbed;

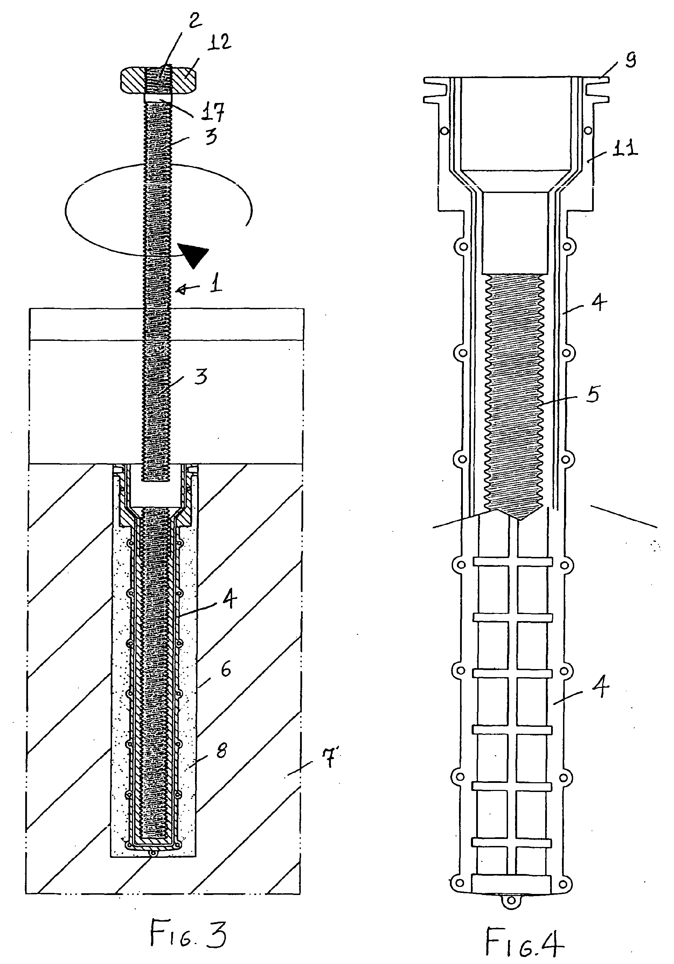

Figure 3 is a further side cross-sectioned view illustrating the tie-rod device according to the present invention and the inner shell thereof, the tie-rod element being removed from its outer tie-rod shell;
Figure 4 is yet another side partially cross-sectioned view illustrating the outer shell for housing therein the tie-rod element proper of the tie-rod device according to the invention; and

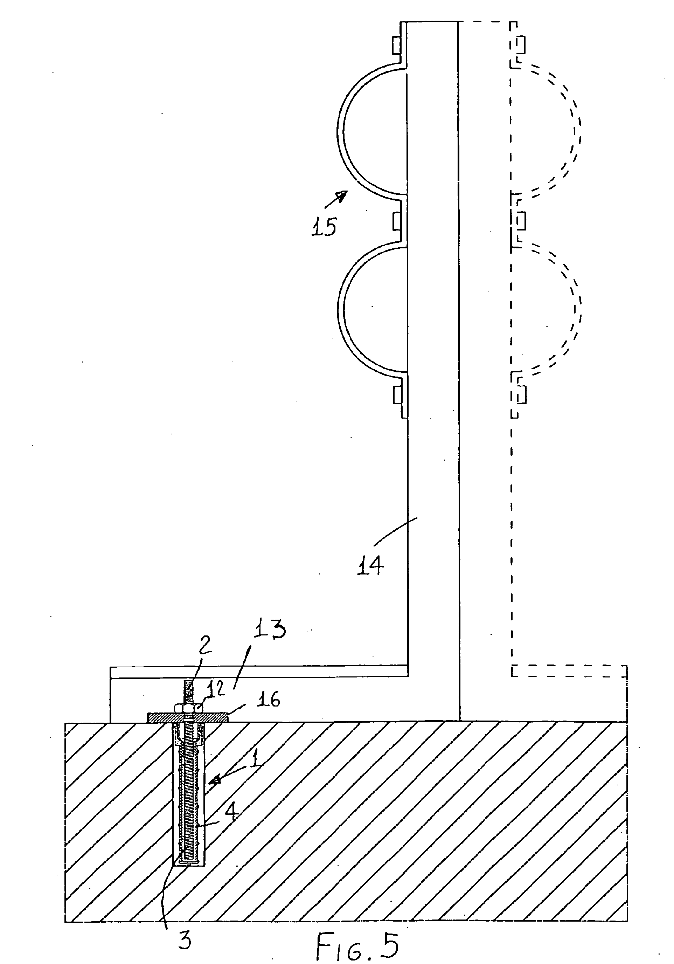

Figure 5 shows a road or superhighway barrier including top uprights and anchored to the roadbed by a plurality of improved tie-rod devices according to the present invention.

### DESCRIPTION OF THE PREFERRED EMBODIMENTS

With reference to the number reference of the above mentioned figures, the tie-rod device according to the present invention, which has been generally indicated by the reference number 1, comprises a metal tie-rod element having a bottom trapezoidal helical thread 3 and a top threaded portion 2, said top threaded portion 2 having a thread of a pitch which is different from that of the bottom thread and reversely directed with respect to the bottom thread.

More specifically, said bottom trapezoidal thread 3 is screw engaged in a plastic material outer shell 4, having a female thread 5, in which is screw-engaged the trapezoidal thread 3 of the top portion of the tie-rod proper.

As shown, the outer shell 4 is preliminarily engaged in a hole 6 formed in the roadbed 7.

Said hole 6 is filled-in by a high strength resin, thereby firmly anchoring the tie-rod outer shell, which is preferably made of a plastic material, in said hole 6 of said roadbed 7.

The bottom portion 3 of the tie-rod which is made of a high strength special steel material 1, is suitably screw engaged in said outer shell 4, thereby reaching a bottom end of stroke or limit position.

Thus, said tie-rod element 1 will provide a single body with said outer shell 4 and the resin material block 8 which is cast or filled-in in said hole 6 of the roadbed 7, as the outer shell 4 is clamped or affixed in said hole 6.

In this connection it should be pointed out that the metal tie-rod 1 according to the invention is provided with said outer shell 4 which has at a top thereof a bearing base 9 for bearing thereon the curb portion 10 of the roadbed 7.

The above mentioned bearing base 9 overlaps a cylindrical collar 11, allowing to properly center the outer shell 4 in the roadbed hole 6.

As shown, the metal tie-rod 1, after having being applied by screwing it to the body of the outer shell 4, will partially project from the roadbed by a top portion 2.

Said top portion 2 of the tie-rod is provided with a thread having a reverse direction from that of the bottom thread 3.

To said top thread 2 can be screw engaged a nut 12, allowing a guard-rail element 15 to be properly applied and affixed to the tie-rod 1 of the base 13 of the upright 14.

The tie-rod device 1 according to the present invention is moreover provided with a flat washer 16, designed for bearing on the roadbed 7, so as to allow the nut 12 to abut against said roadbed.

In this connection it should be moreover pointed out that the metal tie-rod device or element 1 can be easily and quickly screwed-off and/or replaced, if damaged because of an impact of a vehicle against the guard-rail 15.

In particular, to screw off and/or replace the metal tie-rod 1 it will be sufficient to operate the nut 12 by a'wrench, so as to cause said nut 12 to turn for screwing it to the top thread 2.

After having achieved an intermediate position of the tie-rod 1, at which said top thread 2 ends, and starts the bottom trapezoidal thread 3, the nut 2 will stop its screwing on and will be locked, thereby causing the bottom threaded portion 3 to be screwed off and disengaged from the plastic material outer shell 4.

Thus, the damaged metal tie-rod 1, as stated, can be easily and quickly replaced by a new one.

Thus, the above disclosed tie-rod 1, which has been specifically designed for anchoring road and superhighway barriers, can be used for anchoring any types of barriers, either of steel of a concrete material, or any other elements requiring such an operation.

The metal tie-rod 1 is preferably made of a high carbon steel material, having a middle-high strength (80/95 Kg mm²), or a hot galvanized steel material, according to the ASTM A 153 standard.

Moreover, the above mentioned metal tie-rod 1 is preferably subjected to a hot galvanizing process with the following characteristics:
diameter size 20 X 430;
metric thread M20, pitch 2.5 for a length of 100 mm;
"Tp" thread (trapezoidal thread) indicated by the reference number 2, with a thread diameter of 20, pitch 4 leftward, for a length of 295 mm.

According to the invention, the trapezoidal thread 2 is fully covered by a plastic material, preferably polyoxymethylene (POM) with an extension of the outer diameter to 26 mm and, in turn, providing an end outer diameter of 30 mm.

The mechanic self-locking nut 12 is preferably of a type "Conelok", Acc. Class "8" M20, hot galvanized, with an enlarged thread, according to the ASTM A 153 standard.

The flat washer 8, R. 60 mm 21X40X3, is hot galvanized according to the ASTM A 153 standard.

The main feature of the tie-rod 1 according to the invention is that it is very flexible in operation.

Actually, a properly anchoring of road and superhighway barriers 15, for providing a suitable protection against vehicle impacts, must allow the damaged elements thereof to be simply and quickly removed and replaced.

The tie-rod 1 according to the present invention has both the above mentioned features, and its use provides a very simple and quick assembly and replacing.

The road curb 10 will be preset with a plurality of holes 6, arranged at set distances from one another.

The outer shell 4 is fixed by using adhesive material, of a quick set time, and, owing to its specifically designed size and outer ribs, it cannot be removed or disengaged, even under very strong impacts.

The fixing of the barrier 15 through the fixing nut 12 is performed through an interposition of a washer 16, designed for covering the roadbed 7.

It has been found that the invention fully achieves the intended aim and objects.

In practicing the invention, the used materials, as well as the contingent size and shapes, can be any, depending on requirements.

## Claims

1. A tie-rod device (1), specifically designed for anchoring road and superhighway barriers, said tie-rod device (1) comprising a metal tie-rod element having a bottom trapezoidal helical thread (3) and a top threaded portion (2) having a thread with a pitch different from that of said bottom thread and a reverse thread direction therefrom, **characterized in that** said bottom trapezoidal thread is engaged in a plastic material outer shell (4), to be anchored in a hole (6) of the road bed (7), said outer shell having a female thread (5), in which is screw engaged the trapezoidal thread (3) of the bottom portion of said tie-rod element.

2. A tie-rod device, according to claim 1, **characterized in that** said outer shell (4) is in use anchored in said hole (6) of said roadbed (7) by filling into said hole a high strength resin.

3. A tie-rod device, according to claim 1, **characterized in that** said bottom portion (3) of said tie-rod element, made of a high strength special steel material, is screwed in said outer shell (4) to be housed in said shell (4) and arrive at a bottom limit portion thereof.

4. A tie-rod device, according to claims 1 and 2, **characterized in that** as in use said outer shell (4) is fixed in said roadbed hole (6) said tie-rod element forms a single body with said outer shell (4) and said resin material block cast in said roadbed hole (6).

5. A tie-rod device, according to one or more of the preceding claims, **characterized in that** said outer shell (4) of said tie-rod element (1) has at a top thereof a bearing portion (9) for bearing thereagainst a roadbed curb portion (10).

6. A tie-rod device, according to claim 5, **characterized in that** said bearing top portion (9) overlaps a cylindrical collar (11), allowing said outer shell (4) to be centered in said roadbed hole (6).

7. A tie-rod device, according to one or more of the preceding claims, **characterized in that** said tie-rod element (1), after screwing it in said outer shell (4), in use partially projects from the roadbed by said top portion (2).

8. A tie-rod device, according to one or more of the preceding claims, **characterized in that** it further comprises a nut (12) threaded to said tie-rod element (1), said nut (12) allowing to apply and clamp to said tie-rod element (1) a base portion of a guardrail upright (15).

9. A tie-rod device, according to one or more of the preceding claims, **characterized in that** said tie-rod device further comprises a flat washer (16) designed for bearing against said roadbed (7), thereby allowing said nut (12) to abut against said roadbed (7).

10. A tie-rod device, according to claim 8 or 9, **characterized in that** said nut (12), after having arrived at an intermediate position of said tie-rod element (1), at which said top threaded portion (2) ends and said trapezoidal bottom thread (3) starts, stops to be screwed on and is locked, thereby causing said bottom threaded portion to be screwed off and disengaged from said plastic material outer shell (4).

## Patentansprüche

1. Stangenvorrichtung, insbesondere zum Verankern von Straßen- und Autobahnbarrieren ausgelegt, die Stangenvorrichtung (1) umfassend ein Metallstangenelement mit einem unteren, trapezförmigen Spiralengewinde (3) und einem oberen, gewindeten Abschnitt (2) mit einem Gewinde mit einer Steigung, die sich von der des unteren Gewindes unterscheidet, und einer dazu umgekehrten Gewinderichtung, **dadurch gekennzeichnet, dass** das untere, trapezförmige Gewinde in einer Außenschale (4) aus Kunststoffmaterial zur Verankerung in einem Loch (6) der Unterbettung (7) in Eingriff genommen ist, wobei die Außenschale ein Muttergewinde (5) aufweist, in dem das trapezförmige Gewinde (3) des unteren Abschnitts des Stangenelements durch Schrauben in Eingriff genommen ist.

2. Stangenvorrichtung nach Anspruch 1, **dadurch gekennzeichnet, dass** die Außenschale (4) im Gebrauch in dem Loch (6) der Unterbettung (7) durch Einfüllen eines hochfesten Harzes in das Loch verankert ist.

3. Stangenvorrichtung nach Anspruch 1, **dadurch gekennzeichnet, dass** der untere Abschnitt (3) des Stangenelements, der aus speziellem hochfesten Stahlmaterial hergestellt ist, zum Einbauen in die Schale (4) und Erreichen eines unteren Begrenzungsabschnitts davon in die Außenschale (4) geschraubt ist.

4. Stangenvorrichtung nach einem der Ansprüche 1 oder 2, **dadurch gekennzeichnet, dass**, da im Gebrauch die Au-ßenschale (4) in dem Unterbettungsloch (6) befestigt ist, das Stangenelement mit der Außenschale (4) und dem Harzmaterialblock einstückig ist, der in dem Unterbettungsloch (6) gegossen ist.

5. Stangenvorrichtung nach einem oder mehreren der vorhergehenden Ansprüche, **dadurch gekennzeichnet, dass** die Außenschale (4) des Stangenelements (1) an einer Oberseite davon einen Lagerabschnitt (9) zum Lagern an einem Unterbettungsbordkantenabschnitt (10) aufweist.

6. Stangenvorrichtung nach Anspruch 5, **dadurch gekennzeichnet, dass** der obere Lagerabschnitt (9) einen zylindrischen Bund (11) überlappt, wodurch ermöglicht ist, dass die Außenschale (4) in dem Unterbettungsloch (6) zentriert ist.

7. Stangenvorrichtung nach einem oder mehreren der vorhergehenden Ansprüche, **dadurch gekennzeichnet, dass** das Stangenelement (1) nach dem Einschrauben in die Außenschale (4) im Gebrauch durch den oberen Abschnitt (2) teilweise aus der Unterbettung vorsteht.

8. Stangenvorrichtung nach einem oder mehreren der vorhergehenden Ansprüche, **dadurch gekennzeichnet, dass** sie ferner eine Mutter (12) umfasst, die an das Stangenelement (1) gewindet ist, wobei es die Mutter (12) ermöglicht, einen unteren Abschnitt eines Leitplankenpfostens (15) an dem Stangenelement (1) anzubringen und daran zu klemmen.

9. Stangenvorrichtung nach einem oder mehreren der vorhergehenden Ansprüche, **dadurch gekennzeichnet, dass** die Stangenvorrichtung ferner eine flache Unterlegscheibe (16) umfasst, die zum Lagern an der Unterbettung (7) ausgelegt ist, wodurch ermöglicht ist, dass die Mutter (12) an die Unterbettung (7) anstößt.

10. Stangenvorrichtung nach einem der Ansprüche 8 oder 9, **dadurch gekennzeichnet, dass** die Mutter (12) nach dem Erreichen einer Zwischenposition des Stangenelements (1), an der der obere, gewindete Abschnitt (2) endet und das untere, trapezförmige Gewinde (3) beginnt, zum Aufschrauben anhält und blockiert ist, wodurch bewirkt ist, dass der untere, gewindete Abschnitt abgeschraubt ist und aus der Außenschale (4) aus Kunststoffmaterial gelöst ist.

## Revendications

1. Dispositif à tirant (1) conçu spécifiquement pour ancrer des barrières routières et autoroutières, ledit dispositif à tirant (1) comprenant un élément de tirant métallique présentant un filetage hélicoïdal trapézoïdal inférieur (3) et une partie filetée supérieure (2) présentant un filetage avec un pas différent de celui dudit filetage inférieur et une direction de filetage inversée par rapport à celui-ci, **caractérisé en ce que** ledit filetage hélicoïdal trapézoïdal inférieur est engagé dans une coque externe en matière plastique (4) afin d'être ancré dans un orifice (6) de la plate-forme de la route (7), ladite coque externe présentant un filetage femelle (5) dans lequel est vissé le filetage trapézoïdal (3) de la partie inférieure dudit élément de tirant.

2. Dispositif à tirant selon la revendication 1, **caractérisé en ce que** ladite coque externe (4) est ancrée, lors de son utilisation, dans ledit orifice (6) de ladite plate-forme (7) en remplissant ledit orifice à l'aide d'une résine à haute résistance.

3. Dispositif à tirant selon la revendication 1, **caractérisé en ce que** ladite partie inférieure (3) dudit élément de tirant, constituée d'un acier spécial à haute résistance, est vissée dans ladite coque externe (4) afin d'être logée dans ladite coque (4) et d'atteindre la limite inférieure de celle-ci.

4. Dispositif à tirant selon les revendications 1 et 2, **caractérisé en ce que**, lorsque, lors de son utilisation, ladite coque externe (4) est fixée dans ledit orifice (6) de ladite plate-forme, ledit élément de tirant est solidaire de ladite coque externe (4) et dudit bloc de résine moulé dans ledit orifice de la plate-forme (6).

5. Dispositif à tirant selon une ou plusieurs des revendications précédentes, **caractérisé en ce que** ladite coque externe (4) dudit élément de tirant (1) présente, au niveau de sa partie supérieure, une partie de support (9) permettant de supporter une partie de la bordure de la plate-forme (10).

6. Dispositif à tirant selon la revendication 5, **caractérisé en ce que** ladite partie supérieure de support (9) recouvre un collet cylindrique (11), ce qui permet de centrer ladite coque externe (4) dans ledit orifice de la plate-forme (6).

7. Dispositif à tirant selon une ou plusieurs des revendications précédentes, **caractérisé en ce que**, après son vissage dans ladite coque externe (4), ledit élément de tirant (1) dépasse partiellement de la plate-forme avec ladite partie supérieure (2) lors de son utilisation.

8. Dispositif à tirant selon une ou plusieurs des revendications précédentes, **caractérisé en ce qu'**il comprend en outre un écrou (12) vissé sur ledit élément de tirant (1), ledit écrou (12) permettant d'appliquer et de serrer sur ledit élément de tirant (1) une partie de base d'un montant d'une glissière de sécurité (15).

9. Dispositif à tirant selon une ou plusieurs des revendications précédentes, **caractérisé en ce qu'**il comprend en outre une rondelle plate (16) conçue pour s'appuyer contre ladite plate-forme (7), ce qui permet audit écrou (12) d'être en butée contre ladite plate-forme (7).

10. Dispositif à tirant selon la revendication 8 ou 9, **caractérisé en ce que** ledit écrou (12), après avoir atteint une position intermédiaire dudit élément de tirant (1), au niveau de laquelle ladite partie filetée supérieure (2) se termine et au niveau de laquelle débute ledit filetage trapézoïdal inférieur (3), s'arrête et est bloqué, ce qui permet de dévisser la partie filetée inférieure et de la désengager de ladite coque externe en matière plastique (4).
